# NEW EUROPEAN PATENT SPECIFICATION

(11) **EP 1 817 356 B2**
(45) Date of publication and mention of the opposition decision: **19.08.2020**
(45) Mention of the grant of the patent: 20.12.2017
(21) Application number: 05849277.8
(22) Date of filing: 14.11.2005
(51) Int. Cl.: C08G 18/48, C08G 18/50, C08G 65/26, C08G 101/00

(54) **ACID BLOCKED, AMINE BASED, AUTOCATALYTIC POLYOLS AND POLYURETHANE FOAMS MADE THEREFROM**
SÄUREBLOCKIERTE AUTOKATALYTISCHE POLYOLE AUF AMIN-BASIS UND DARAUS HERGESTELLTE POLYURETHANSCHÄUME
POLYOLS AUTOCATALYTIQUES A BASE D'AMINE BLOQUES PAR UN ACIDE ET MOUSSES DE POLYURETHANNE PRODUITES A PARTIR DESDITS POLYOLS

(30) Priority: 17.11.2004 US 628643 P
(43) Date of publication of application: 15.08.2007
(73) Proprietor: Dow Global Technologies LLC, Midland, MI 48674 (US)
(72) Inventor: CASATI, Francois, M., Pfaffikon 8808 (CH); DAWE, Robert, D., Sarnia, ON N7S 3S6 (CA); PRANGE, Robbyn, Pearland, TX 77584 (US); DRUMRIGHT, Ray, E., Midland, MI 48640 (US); POLK, Ross, K., Danbury, TX 77534 (US)
(74) Representative: Beck Greener LLP
(86) International application number: PCT/US2005/040798
(87) International publication number: WO 2006/055396

(56) References cited:
- WO-A-03/016372
- WO-A-03/055930
- DE-A1- 10 054 065
- US-A- 5 367 050
- US-A- 5 489 618

## Description

The present invention pertains to the use of acid blocked, amine-based, autocatalytic polyols, and to the use of these autocatalytic polyols in the production of polyurethane foams.

Polyether polyols based on the polymerization of alkylene oxides, and/or polyester polyols, are the major components of a polyurethane system together with isocyanates. Polyols can also be filled polyols, such as SAN (Styrene/Acrylonitrile), PIPA (polyisocyanate polyaddition) or PHD (polyurea) polyols, as described in "Polyurethane Handbook", by G. Oertel, Hanser publisher. These systems generally contain additional components such as blowing agents, cross-linkers, chain extenders, surfactants, cell regulators, stabilizers, antioxidants, flame retardant additives, eventually fillers, and typically catalysts such as tertiary amines and/or organometallic salts.

Organometallic catalysts can raise environmental issues due to leaching upon aging of the polyurethane products. Others, such as tin salts, are often detrimental to polyurethane aging.

Tertiary amine catalysts generally have a strong odor and many are highly volatile due to their low molecular weight. The release of the tertiary amine during foam processing may present safety and toxicity concerns and the release of residual amine during customer handling is undesirable. The release of tertiary amine catalysts vapor in polyurethane products are also reported to be detrimental to vinyl film and polycarbonate sheets exposed thereto. Specifically, the tertiary amine catalysts present in polyurethane foams have been linked to the staining of the vinyl film and degradation of polycarbonate sheets. The PVC staining and polycarbonate decomposition problems are especially prevalent in environments where elevated temperatures exist for prolonged periods of time.

Various solutions are proposed to reduce the emission of the volatile catalyst. One proposed solution is the use of amine catalysts which contain a hydrogen isocyanate reactive group, i.e. a hydroxyl or a primary and/or a secondary amine. Such compounds are, for instance, disclosed in EP Publications 677,540; 747,407 and EP 1,109,847; and in U.S. Patents 3,448,065; 4,122,038; 4,368,278 and 4,510,269. A reported advantage of this catalyst composition is that these amines are incorporated into the polyurethane product. However, such reactive catalysts have to be used at high levels in the polyurethane formulation to compensate for their lack of mobility during the foaming reactions and since most of them are monofunctional they act as chain stoppers. Hence these reactive amine catalysts have a detrimental effect on the polymer build up and affect polyurethane product physical characteristics, especially foam aging.

Acid blocked amine catalysts are also used to produce polyurethane foams, as described for example in U.S. Patents 4,366,084; 5,179,131; 4,232,152 and EP 1 457 507. Amines blocked with specific hydrocarboxylic acids are disclosed in US 5,489,618. Advantages reported with such catalysts disclosed in the '131, '618 and EP Publication are more open foams, reduced amine emissions and improved foam tear characteristics. However, there is no mention of foam aging improvements.

Use of specific amine-based polyols is proposed in EP 539,819, in U.S. Patent 5,672,636, in WO Publications 01/ 58,976, 02/22702, 03/016373, 03/029320 and WO 03/55930. These polyols possess autocatalytic characteristics, i.e. they act as catalysts per se. Other type of autocatalytic polyols are those containing a tertiary amine in the propylene oxides/ethylene oxide chain.

WO 03/016372A describes the production of flexible polyurethane forms with the reduction or elimination of conventional and/or reactive tertiary amine catalysts. The reactivity of the foam forming system is controlled by the addition of an autocatalytic polymer containing a tertiary amine.

While these autocatalytic polyols are better in foam aging than reactive amines since they are not chain-stoppers, experience shows that most of them do not by themselves give a balanced reactivity profile between blowing (water-isocyanate) and gelling (polyol-isocyanate) reactions during foaming. Unbalanced reactivity translates in flexible foams with reduced hardness, or load-bearing, and worse aging properties compared to foams made with fugitive catalysts, such as triethylenediamine and bis-dimethylamionoethyl-ether. An example of unbalanced reactivity profile is for instance reported in "Polyurethane Chemistry and Technology", by J.H. Saunders and K.C. Frisch, John Wiley publisher, part 1, page 334, which states that "factors favoring bad (high compression) set ...include: large excess of water in foam formulation, high amine catalyst concentration, very active catalyst for the NCO/H2O reaction."

Therefore, there continues to be a need to reduce volatile organic compounds (VOC) of polyurethane compositions by replacing tertiary amine catalysts with alternative catalysts while maintaining properly balanced polyurethane reactions in order to obtain foams having acceptable hardness and good aging characteristics.

It is an object of the present invention to produce polyurethane foams having superior aging characteristics by using acid-blocked, amine based, autocatalytic polyols. The use of such polyols allows the production of polyurethane products in the absence or reduction of conventional amine based and/or organometallic catalysts. With the elimination or reduction of conventional amine and organometallic catalysts, the disadvantages associated with such catalysts can be avoided.

It is another object of the invention to have a process to adjust reactivity, such as foaming and/or gelation rates, by using a combination of autocatalytic polyols, i.e. without having to rely solely on conventional catalyst adjustments.

The present invention is a process for the production of a polyurethane foam by reaction of a mixture of
(a) at least one liquid organic polyisocyanate with
(b) a polyol composition comprising
   (b1) from 0 to 99 percent by weight of a polyol compound having a functionality of 2 to 8 and a hydroxyl number of from 15 to 300 mg KOH/gram and
   (b2) from 1 to 100 by weight of at least one polyol compound having a functionality of 2 to 8, a hydroxyl number of from 15 to 800 mg KOH/gram and containing at least one tertiary amine group providing autocatalytic function,
   wherein a portion of the tertiary amine is acid neutralized with glycolic acid and the weight percent of polyol is based on the total amount of polyol composition (b);
(c) in the presence of water as a blowing agent; and
(d) optionally additives or auxiliary agents known per se for the production of polyurethane foams, including catalysts.

In another embodiment, the invention is the production of a polyurethane foam as above where polyol (b1) comprises 75 percent or greater by weight of total polyol (b1) and (b2) and polyol (b2) has a hydroxyl number of 20 to 800.

In another embodiment, the invention is a polyol composition comprising from 0 to 99 percent by weight of a polyol compound having a functionality of 2 to 8 and a hydroxyl number of from 15 to 300 mg KOH/gram and from 1 to 100 by weight of at least one polyol compound having a functionality of 2 to 8, a hydroxyl number of from 15 to 800, generally from 15 to 300 mg KOH/gram containing at least one tertiary amine group providing autocatalytic function and glycolic acid.

In another embodiment, the present invention is a process whereby polyol (b2) is a combination of two autocatalytic polyols, one with blowing characteristics (promotes the reaction of water with a polyisocyanate), and the other with gelling characteristics (promotes the reaction of polyol with an isocyanate).

In another embodiment, the present invention is a process whereby there is no other catalyst besides an acid blocked, amine based, autocatalytic polyols (b2) or a combination of such polyols.

In another embodiment, the present invention is a process whereby autocatalytic polyol (b2) is an alkylene oxide adduct of an initiator bearing N-methyl and/or N,N-dimethyl amino groups, or is capped with N-methyl and/or N,N-dimethyl or a pyrrolidine group or an imidazole.

In another embodiment, the present invention is a process whereby polyol (b2) is a blend of amine initiated and amine capped polyols.

The acid used to partially block the amine moiety of autocatalytic polyol (b2) is glycolic acid.

In another embodiment, polyol (b1) is also an amine based, autocatalytic polyol, but without acid neutralization.

In another embodiment, autocatalytic polyol (b2) is partially acid neutralized and is blended with an amine catalyst which is not acid neutralized.

In another embodiment, the present invention is a process whereby the blowing agent (c) is only water.

In another embodiment, the present invention is a process whereby the polyurethane foam is a flexible foam.

In another embodiment the present invention is a process whereby the polyurethane foam is molded.

In another embodiment the present invention is a process whereby the polyurethane foam density is less than 70 kg/m3.

In another embodiment the present invention is a process whereby the polyurethane molded parts are demolded in less than 8 minutes.

In another embodiment the present invention is a process whereby the polyurethane foam is used to produce multihardness foams, i.e, parts with different hardnesses.

In another embodiment the present invention is a process whereby the polyurethane foam is used to produce automotive seats and padding.

In another embodiment, the present invention is a process as disclosed above wherein the polyisocyanate (a) contains at least one polyisocyanate that is a reaction product of an excess of polyisocyanate with an amine based, autocatalytic polyol.

In a further embodiment, the present invention is a process as disclosed above where the polyol (b) contains a polyol-terminated prepolymer obtained by the reaction of an excess of polyol with a polyisocyanate wherein the polyol is defined by (b2).

The invention further provides for polyurethane foams produced by any of the above processes.

In accordance with the present invention, a polyol formulation and the use of the formulation for producing polyurethane products is provided, whereby the polyurethane products can be produced with a reduced level of volatile tertiary amine catalysts. The reduction of volatile compounds reduces or eliminates issues associated with emission of such compounds. The use of such a polyol formulation also provides a polyurethane catalyst system which gives good foam processing, i.e. a minimal level of scrap, while the physical characteristics of the foam made therefrom, such as foam load-bearing, tear strength, tensile strength and elongation, as well as foam aging, are not adversely affected and may even be improved by the reduction/elimination of conventional or reactive amine and/or organometallic catalysts.

These advantages are achieved by including in the polyurethane foam formulation at least one acid blocked, amine based autocatalytic polyol (b2). The use of such acid-blocked, amine based polyols provide a polyurethane system which gives good foam cure, i.e. short cycle times, even at high water levels and high isocyanate indexes, while amine catalyst level is minimized and VOC's are reduced.

Suitable polyols (b) that can be used to produce polyurethane foams of the present invention are well known in the art and include those described herein and any other commercially available polyol and/or SAN, PIPA or PHD copolymer polyols. Such polyols are described in "Polyurethane Handbook", by G. Oertel, Hanser publishers. Mixtures of one or more polyols and/or one or more copolymer polyols may also be used to produce polyurethane products according to the present invention.

Representative polyols include polyether polyols, polyester polyols, polyhydroxy-terminated acetal resins, hydroxyl-terminated amines. Examples of these and other suitable isocyanate-reactive materials are described more fully in U.S. Patent 4,394,491. Alternative polyols that may be used include polyalkylene carbonate-based polyols and polyphosphate-based polyols. Preferred are polyols prepared by adding an alkylene oxide, such as ethylene oxide, propylene oxide, butylene oxide or a combination thereof, to an initiator having from 2 to 8, preferably 2 to 6 active hydrogen atoms. Catalysis for this polymerization can be either anionic or cationic, with catalysts such as KOH, CsOH, boron trifluoride, or a double cyanide complex (DMC) catalyst such as zinc hexacyanocobaltate, or quaternary phosphazenium compounds. In the case of alkaline catalysts, these are eliminated from the polyol at the end of production by a proper finishing step, such as coalescence, magnesium silicate (magsil) separation, ion exchange or less preferably by acid neutralization.

The polyols or blends thereof employed depend upon the end use of the polyurethane foam to be produced. The hydroxyl number and molecular weight of the polyol or polyols employed can vary accordingly over a wide range. In general, the hydroxyl number of the polyols employed for use in producing a flexible or visco-elastic foam may range from 15 to 300.

In the production of a flexible polyurethane foam, the polyol is preferably a polyether polyol and/or a polyester polyol. The polyol generally has an average functionality ranging from 2 to 5, preferably 2 to 4, and an average hydroxyl number ranging from 15 to 300 mg KOH/g, preferably from 20 to 200, and more preferably from 20 to 70mg KOH/g. As a further refinement, the specific foam application will likewise influence the choice of base polyol. As an example, for molded foam, the hydroxyl number of the base polyol may be on the order of 20 to 60 with ethylene oxide (EO) capping, and for slabstock foams the hydroxyl number may be on the order of 25 to 75 and is either mixed feed EO/PO (propylene oxide) or is only slightly capped with EO or is 100 percent PO based.

In the production of a visco-elastic foam, polyols having a functionality as for flexible foam can be used, however; the polyol or polyol blend will preferably contain polyols having a hydroxyl number from 150 to 300 mg KOH/g. For the production of semi-rigid foams or elastomers, it is preferred to use a trifunctional polyol with a hydroxyl number of 30 to 80.

The initiators for the production of polyols (b1) generally have 2 to 8 functional groups that will react with the alkylene oxide. Examples of suitable initiator molecules are water, organic dicarboxylic acids, such as succinic acid, adipic acid, phthalic acid and terephthalic acid and polyhydric, in particular dihydric to octahydric alcohols or dialkylene glycols, for example ethanediol, 1,2- and 1,3-propanediol, diethylene glycol, dipropylene glycol, 1,4-butanediol, 1,6-hexanediol, glycerol, trimethylolpropane, pentaerythritol, sorbitol and sucrose or blends thereof. Initiators of polyol (b1) can also be of the same type as for polyol (b2), i.e. linear and cyclic amine compounds containing a tertiary amine such as ethanoldiamine, triethanoldiamine, isomers of toluene diamine, isomers of diaminodiphenylmethane, ethylenediamine, N-methyl-1,2-ethanediamine, N-Methyl-1,3-propanediamine, N,N-dimethyl-1,3-diaminopropane, N,N-dimethylethanolamine, 3,3'-diamino-N-methyldipropylamine, N.N-dimethyl-1,4-diaminobutane, N,N-dimethyl-1,3-diaminopropane, N,N-dimethyldipropylenetriamine, aminopropyl-imidazole, N-aminoethylpiperazine, N-(aminoalkyl)-pyrrolidine, N-(2-aminoethyl)-aziridine, or mixtures thereof.

The acid blocked, amine based, autocatalytic polyol (b2) is generally a liquid at room temperature and is preferably substantially free of any alkali metals used in production of the polyol, such as potassium, sodium or cesium. The polyol accelerates preferably the addition reaction of organic polyisocyanates with polyhydroxyl or polyamino compounds, but may also be active on the reaction between the isocyanate and water. The combination of autocatalytic polyols (b2) will be used in the present invention together with conventional polyols (b1), including copolymer polyols of the SAN, PHD or PIPA type.

In general, the properties of the autocatalytic polyols can vary widely as described above for polyol (b1) in terms of number average molecular weight, hydroxyl number, functionality. When (b2) is the predominant polyol used in a formulation, the hydroxyl number, functionality will generally be as described above for the particular desired foam characteristics. When (b2) is not the predominant polyol in the formulation, the hydroxyl number, functionality can deviate substantially from the normal values used in a particular application. By less than the predominant polyol component means less than 25 percent, generally less than 15, preferably less than 10 and in some applications less than 5 percent by weight of the total polyol component. Thus, for example, when producing a slabstock foam the level of (b2) polyol can be less than 5 percent by weight of the total polyol. In such cases the hydroxyl number of the polyol (i.e., number average molecular weight) will not have an adverse affect on the final foam and can vary over a wide range, generally from 20 to 800. As the hydroxyl number of the polyol increases, the catalytic activity of the polyol increases. This increase in catalytic activity is generally believed to be due to an increase in the concentration of tertiary amines per polyol on a weight bases and increased basicity.

Autocatalytic polyols (b2) are based on a tertiary amine, such as those made from an amine initiator. Preferably the initiator contains at least one N-alkyl amino group, where the alkyl group contains from 1 to 6 carbon atoms and preferably from 1 to 3 carbon atoms, and in one preferred embodiment, the alkyl group is methyl. In another preferred embodiment, the initiator contains at least one N,N-dialkyl amino group where the alkyl is as previously described.

Examples of suitable initiators containing a tertiary amine are disclosed in EP Publications 488 291 and 539,819, in U.S. Patents 5,476,969 and 5,672,636, and in WO Publications 01/ 58,976, 02/22702, 03/016373, 03/029320 and WO 03/55930.

They can also be capped with a tertiary amine, following, for instance the process described in WO 03/55930. The amine can also be incorporated in the PO/EO chain of the polyol or be part of a polymer as described in WO 2004/060956.

Amine based polyol (b2) with autocatalytic characteristics can be also those containing a tertiary nitrogen in the chain, by using for instance an alkyl-aziridine as co-monomer with PO and EO, or (b2) can be polyols capped with a tertiary amine, by using for example a N,N-dialkyl-glycidylamine as taught in US 3,428,708.

Other amine based, autocatalytic polyols (b2) are those containing at least one imine linkage and at least one tertiary amine group, for instance such as those made by reaction of an epoxy resin having an EEW (epoxy equivalent weight) of at least 150, with the phenol group of salicyladehyde, and subsequent reaction of the aldehyde moiety with a tertiary amine bearing a primary amine group, such as, for instance, N-(aminoalkyl)-pyrrolidine, or 3-dimethylamino-1-propylamine or 1(3-aminopropyl)-imidazole. Processes for the production of such polyols is described in WO2005/063840.

Examples of commercially available amine initiators for producing the polyols of (b2) include triethylenetetramine, ethylenediamine, N-methyl-1,2-ethanediamine, N-methyl-1,3-propanediamine, N,N-dimethyl-1,3-diaminopropane, N,N-dimethyl-1,4-diaminobutane, N,N-dimethyldipropylenetriamine, N,N-dimethyl-tris(hydroxymethyl)aminomethane can be made by methylation of tris-amino, or tris(hydroxymethyl)aminomethane; an aminoalcohol commercially available from ANGUS Chemical, diamino or dihydroxy derivatives of piperazine such as N-bis(2-amino-isobutyl)- piperazine, 3,3'-diamino-N-methyldipropylamine; 2,2'-diamino-N-methyldiethylamine; 2,3-diamino-N-methyl-ethyl-propylamine; 3,3'-diamino-N-methyldipropylamine.

It has been found surprisingly that, when partially acid blocked, autocatalytic polyols (b2) give balanced polyurethane reactions, leading to improved foam aging characteristics.

Acid blocking agents are preferably combined with a diluent, or a solvent when they are solid, such as glycols or water, and the acid is slowly added to the polyol under stirring while exotherm is controlled via proper cooling of the reactor.

The acid used to neutralize the autocatalytic polyol (b2) is glycolic acid. The molar ratio between the acids and the amines present in polyols (b2) is less than 0.8, which means that no more than 80 % of the amines are neutralized. Furthermore the total tertiary amines present in the polyurethane formulation is preferably less than 0.8, which means than not more than 80 % of the total tertiary amines present is neutralized. More preferably these amines are neutralized at less than 50 %, i.e. only 50 % or less of the tertiary nitrogens present in the foam formulation are acid blocked. Even more preferably, the acid or acids neutralize less than 30 % of the total amines. To have an affect, at least 0.1 percent, preferably at least 0.5 percent and more preferably at least 1 percent of the total amines are acid blocked or acid neutralized.

Indeed, without being bound by any theory, it is thought that the acid used to block the autocatalytic polyol (b2) will eventually neutralize some of the polyol (b1), when it also contains nitrogen moieties, and any other amine, once the components for producing a foam, such as polyols, water, any catalyst, surfactant, crosslinker, are blended. The acid may also react with metal salts or other amines present in the formulation. This can occur in case of use of amine based catalyst, such as triethylenediamine, dimethylethanolamine, or metal salts catalysts, such as stannous octoate, or amine based crosslinkers, such as diethanolamine.

The weight ratio of acid blocked, amine based, autocatalytic polyol (b2) to polyol (b1) will vary depending upon the reaction profile required by the specific application. Usually polyol (b2) will be used at levels up to 100 parts, but preferably at a level below 80 parts, and more preferably at a level below 50 parts. Polyol (b1) is preferably present at a level of at least 0.5 percent, more preferably 1.0 percent or greater by weight of the total polyol (b). Generally if a reaction mixture with a base level of catalyst having a specified curing time, the combination acid blocked autocatalytic polyol (b2) and polyol (b1) is added in an amount so that the curing time is equivalent where the reaction mix contains at least 10 percent by weight less conventional catalyst. Preferably the combination of (b1) and (b2) is added to give a reaction mixture containing 20 percent less catalyst than the base level. More preferably the addition of (b1) and (b2) will reduce the amount of catalyst required by 30 percent over the base level. The most preferred level of (b1) and (b2) addition is where the need for conventional, fugitive or reactive tertiary amine catalysts or organometallic salt is eliminated.

Combination of two or more acid blocked, amine based, autocatalytic polyols (b2) can also be used with satisfactory results in a single polyurethane formulation when one wants for instance to adjust blowing and gelling reactions modifying for instance the amine structures of the autocatalytic polyol (b2) with different tertiary amines, functionalities, equivalent weights, and their respective amounts in the formulations. Combination of different acids to neutralize autocatalytic polyol (b2) can also be contemplated for the same reason, i.e. adjustment of reaction profile and eventually of delayed action.

Polyols pre-reacted with polyisocyanates and polyol (b2) with no free isocyanate functions can also be used in the polyurethane formulation. Isocyanate prepolymers based on polyol (b2) can be prepared with standard equipment, using conventional methods, such a heating the polyol (b2) in a reactor and adding slowly the isocyanate under stirring and then adding eventually a second polyol, or by prereacting a first polyol with a diisocyanate and then adding polyol (b2).

The isocyanates which may be used with the autocatalytic polymers of the present invention include aliphatic, cycloaliphatic, arylaliphatic and aromatic isocyanates. Aromatic isocyanates, especially aromatic polyisocyanates are preferred.

Examples of suitable aromatic isocyanates include the 4,4'-, 2,4' and 2,2'-isomers of diphenylmethane diisocyante (MDI), blends thereof and polymeric and monomeric MDI blends toluene-2,4- and 2,6-diisocyanates (TDI), m- and p-phenylenediisocyanate, chlorophenylene-2,4-diisocyanate, diphenylene-4,4'-diisocyanate, 4,4'-diisocyanate-3,3'-dimehtyldiphenyl, 3-methyldiphenyl-methane-4,4'-diisocyanate and diphenyletherdiisocyanate and 2,4,6-triisocyanatotoluene and 2,4,4'-triisocyanatodiphenylether.

Mixtures of isocyanates may be used, such as the commercially available mixtures of 2,4- and 2,6-isomers of toluene diisocyantes. A crude polyisocyanate may also be used in the practice of this invention, such as crude toluene diisocyanate obtained by the phosgenation of a mixture of toluene diamine or the crude diphenylmethane diisocyanate obtained by the phosgenation of crude methylene diphenylamine. TDI/MDI blends may also be used. MDI or TDI based prepolymers can also be used, made either with polyol (b1), polyol (b2) or any other polyol as described heretofore. Isocyanate-terminated prepolymers are prepared by reacting an excess of polyisocyanate with polyols, including aminated polyols or imines/enamines thereof, or polyamines.

Examples of aliphatic polyisocyanates include ethylene diisocyanate, 1,6-hexamethylene diisocyanate, isophorone diisocyanate, cyclohexane 1,4-diisocyanate, 4,4'-dicyclohexylmethane diisocyanate, saturated analogues of the above mentioned aromatic isocyanates and mixtures thereof.

The preferred polyisocyantes for the production of rigid or semi-rigid foams are polymethylene polyphenylene isocyanates, the 2,2', 2,4' and 4,4' isomers of diphenylmethylene diisocyanate and mixtures thereof. For the production of flexible foams, the preferred polyisocyanates are the toluene-2,4- and 2,6-diisocyanates or MDI or combinations of TDI/MDI or prepolymers made therefrom.

Isocyanate tipped prepolymer based on polyol (b2) can also be used in the polyurethane formulation.

For producing a polyurethane-based foam, a blowing agent is required. In the production of flexible polyurethane foams of the present invention, the blowing agent is water. The amount of water is preferably in the range of from 0.5 to 10 parts by weight, more preferably from 2 to 7 parts by weight based on 100 parts by weight of the polyol. Although not preferred, other blowing agents can be liquid or gaseous carbon dioxide, methylene chloride, acetone, pentane, isopentane, cyclopentane, methylal or dimethoxymethane, dimethylcarbonate. Use of artificially reduced, or increased, atmospheric pressure, such as disclosed in US 5,194,453, or frothing, can also be contemplated with the present invention.

In addition to the foregoing critical components, it is often desirable to employ certain other ingredients in preparing polyurethane polymers. Among these additional ingredients are surfactants, preservatives, flame retardants, colorants, antioxidants, reinforcing agents, stabilizers and fillers, recycled polyurethane powder. Reduced amounts of conventional, fugitive catalysts can also be used with this invention, such as triethylenediamine, bis-dimethylaminoethyl-ether, and stannous octoate. Low VOC catalysts, based on reactive amines, such as, for instance, dimethylethanolamine, or tin ricinoleate, such as Kosmos EF, sold by Godschmidt AG, division of Degussa, can also be combined with acid neutralized, autocatylic, amine-based polyols of the present invention.

In making polyurethane foam, it is generally preferred to employ an amount of a surfactant to stabilize the foaming reaction mixture until it cures. Such surfactants advantageously comprise a liquid or solid organosilicone surfactant. Other surfactants include polyethylene glycol ethers of long-chain alcohols, tertiary amine or alkanolamine salts of long-chain alkyl acid sulfate esters, alkyl sulfonic esters and alkyl arylsulfonic acids. Such surfactants are employed in amounts sufficient to stabilize the foaming reaction mixture against collapse and the formation of large, uneven cells. Typically, 0.2 to 3 parts of the surfactant per 100 parts by weight total polyol (b) are sufficient for this purpose.

A crosslinking agent or a chain extender may be added, if necessary. The crosslinking agent or the chain extender includes low-molecular weight polyhydric alcohols such as ethylene glycol, diethylene glycol, 1,4-butanediol, and glycerin; low-molecular weight amine polyol such as diethanolamine and triethanolamine; polyamines such as ethylene diamine, xlylenediamine, and methylene-bis(o-chloroaniline). The use of such crosslinking agents or chain extenders is known in the art as disclosed in U.S. Patents 4,863,979, 4,883,825 and 4,963,399 and EP 549,120.

When preparing foams for use in transportation, a flame retardant is sometimes included as an additive. Any known liquid or solid flame retardant can be used with the autocatalytic polyols of the present invention. Generally such flame retardant agents are halogen-substituted phosphates and inorganic flame proofing agents. Common halogen-substituted phosphates are tricresyl phosphate, tris(1,3-dichloropropyl phosphate, tris(2,3-dibromopropyl) phosphate and tetrakis (2-chloroethyl)ethylene diphosphate. Inorganic flame retardants include red phosphorous, aluminum oxide hydrate, antimony trioxide, ammonium sulfate, expandable graphite, urea or melamine cyanurate or mixtures of at least two flame retardants. In general, when present, flame retardants are added at a level of from 5 to 50 parts by weight, preferable from 5 to 25 parts by weight of the flame retardant per 100 parts per weight of the total polyol present.

The applications for foams produced by the present invention are those known in the industry. Flexible, semi-flexible foams and find use in applications such as bedding, furniture, automobile seats, sun visors, armrests, door panels, noise and heat insulation parts.

Processes for producing polyurethane products are well known in the art. In general components of the polyurethane-forming reaction mixture may be mixed together in any convenient manner, for example by using any of the mixing equipment described in the prior art for the purpose such as described in "Polyurethane Handbook", by G. Oertel, Hanser publisher.

The polyurethane products are either produced continuously or discontinuously, by injection, pouring, spraying, casting, calendering; these are made under free rise or molded conditions, with or without release agents, in-mold coating, or any inserts or skin put in the mold. In case of flexible foams, those can be mono- or dual-hardness.

The following examples are given to illustrate the invention and should not be interpreted as limiting in anyway. Unless stated otherwise, all parts and percentages are given by weight.

A description of the raw materials used in the examples is as follows.
DEOA
   is 85 % diethanolamine in water.
Glycerine
   Available from Aldrich.
DMAPA
   is 3-(N,N-dimethylamino)propylamine.
Niax Y-10184
   is a silicone based surfactant Available from General Electric.
Dabco DC 5169
   is a silicone-based surfactant available from Air Products and Chemicals Inc.
Dabco 33 LV
   is a tertiary amine catalyst available from Air Products and Chemicals Inc.
Niax A-1
   is a tertiary amine catalyst Available from General Electric.
Niax A-300
   is an acid-blocked amine catalyst Available from General Electric.
glycolic Acid
   is a 70 % solution in water of hydroxyl-carboxylic acid available from Aldrich.
Gluconic acid
   is a 50 % solution in water available from Aldrich.
Formic acid
   is 96 percent purity, carboxylic acid available from Aldrich.
2-Chloropropionic acid
   92 percent purity available from Aldrich.
D.E.R. 732
   is an aliphatic epoxy resin with an Epoxide equivalent weight of 322 available from The Dow Chemical Company.
Polyol A
   is the reaction product of D.E.R. 732, salicyladehyde and DMAPA.
Polyol B
   is a 1,700 equivalent weight propoxylated tetrol initiated with 3,3'-diamino-N-methyl dipropylamine and capped with 20 % ethylene oxide.
Specflex NC-630
   is a 1,700 EW polyoxypropylene polyoxyethylene polyol initiated with a blend of glycerol and sucrose available from The Dow Chemical Company.
Polyol C
   is a polyol similar to Specflex NC 630, but with a slightly lower functionality.
Specflex NC 632
   is a high functionality polyol similar to Specflex NC 630 available from The Dow Chemical Company
Voranol 4053
   is a high EO containing hexol, used as a cell opener available from The Dow Chemical Company.
Voranol 4701
   is a glycerol initiated polyol available from The Dow Chemical Company.
SPECFLEX NC-700
   is a 40 percent SAN based copolymer polyol with an average hydroxyl number of 20 available from The Dow Chemical Company.
Copolymer polyol D
   is a 43 percent SAN based copolymer polyol similar to Specflex NC-700 with a 20 percent EO carrier polyol.
VORANATE T-80
   is TDI 80/20 isocyanate available from The Dow Chemical Company.

Foams made in the laboratory on the bench are produced by preblending polyols, surfactants, crosslinkers, catalysts and water, conditioned at 25°C. Isocyanate also conditioned at 25°C is added under stirring at 3,000 RPM for 5 seconds. At the end of mixing the reactants are poured in a 30x30x10 cm aluminum mold heated at 60°C which is subsequently closed. Prior to use, the mold is sprayed with a release agent. Foam curing at 6 minutes is assessed by manually demolding the part, looking for internal and external defects. If none, the part is rated as OK. Free-rise foams are produced by pouring the reactants in a 5 gallon bucket.

Machine made foams are prepared using a Cannon high pressure machine. Mold size is 40x40x10 cm and demolding time is 6 minutes 30 seconds. All foams are tested according to ASTM D-3574-83 test methods.

### Example 1 (not according to the invention)

### Preparation of an acid blocked, amine based, autocatalytic polyol (b2).

### 1A) Production of Polyol A

A 1 liter two neck round bottom flask equipped with mechanical stirrer, Claissen adapter, and gas inlet adapter connected to vacuum/ nitrogen source is charged with 450.0 g (1.4 mol epoxy groups) of D.E.R. 732 , 170.7 g (1.4 mol) of salicylaldehyde, and 5.4 g (3.17 active, 8.4 mmol) of tetrabutylphosphonium acetate. The apparatus is evacuated to 20 mm Hg and then vented to nitrogen. Vacuum/nitrogen are cycled a total of 5 times ending in nitrogen. The apparatus is left under a dynamic atmosphere of nitrogen and submerged in an oil bath held at 120°C. After 1 hour, the bath temperature is increased to 150°C and the reaction mixture is stirred over night. After 20 hours, the reaction mixture is sampled and analyzed revealing that all epoxy is consumed. The flask is removed from the oil bath and fitted with an addition funnel containing 141.8 (1.39 mol) of DMAPA. The amine is added dropwise to the stirred, warm reaction mixture over 1 hour. After the addition is complete, the orange, clear oil is poured from the flask into a bottle. Isolated yield = 760.1 g. The theoretical amount of water in the product is 3.3 wt %. The theoretical amount of dimethylamino groups in the sample is 1.82 meq/g.

### 1B) Partial acid neutralization of Polyol A:

To 100 grams of polyol A is added 3 grams of formic acid. A slight exotherm is observed and the blend is clear.

### Examples 2 (not according to the invention)

### Preparation of the polyol masterbatch:

For a polyol masterbatch, the following polyol blend is made:

| | |
|---|---|
| Solution example 1 | 1.03 |
| Polyol B | 39 |
| Polyol C | 25 |
| Copolymer D | 35 |
| DEOA | 1.6 |
| Niax Y-10184 | 1.2 |
| Water | 3.6 |

### Example 3 (not according to the invention) and 3C

Free-rise foaming tests are done using the formulations of Table 1:

**TABLE 1**

| Example | 3 | 3C* |
|---|---|---|
| Masterbatch example 2 | 106.43 | |
| Polyol B | | 39 |
| Polyol C | | 25 |
| Copolymer D | | 35 |
| DEOA | | 1.6 |
| Niax Y-10184 | | 1.2 |
| Water | | 3.6 |
| | | |
| Rise time (s) | 56 | 54 |
| *Example 3C is a comparative example. | | |

Both foams have comparable density and cell structure, while the foam of example 3, partially blocked with a carboxylic acid, shows a slightly slower reaction profile.

### Examples 4 and 4C

Foam production with the high pressure Cannon machine is done based on the formulations of Table 2:

**TABLE 2**

| Example | 4 | 4C |
|---|---|---|
| Specflex NC-630 | 50 | 50 |
| Polyol B | 20 | 20 |
| Polyol A | 1.5 | 1.5 |
| Copolymer polyol D | 28.5 | 28.5 |
| Voranol 4053 | 1 | 0 |
| DEOA | 1.6 | 1.6 |
| Niax Y-10184 | 1 | 1 |
| Niax A-1 | 0.01 | 0.01 |
| Water (total) | 3.6 | 3.6 |
| Glycolic acid | 0.07 | 0 |
| Voranate T-80 (index) | 105 | 105 |
| | | |
| Core density (kg/m3) | 34 | 34 |
| 50 % IFD (indentation) | 262 | 298 |
| Airflow (cfm) | 1.3 | 1.1 |
| 50 % Compression Set | 11 | 13.8 |
| 75 % Compression Set | 33 | 44.5 |
| 50 % HACS | 25 | 55 |
| 4C is a comparative example (not part of this invention) | | |

HACS means Humid Aged Compression Set. The foam is aged at 100 % Relative humidity and 125°C for 5 hours, before running the normal dry compression set. The positive effect of the addition of glycolic acid in example 4 of this invention is quite clear. It is also important to note that only a very small amount of conventional amine catalyst (Niax A-1) is used.

### Example 5

### Preparation of acid-blocked, amine based, autocatalytic polyol.

To 100 grams of polyol B is added 0.35 grams of glycolic acid. This partial salt of amine based polyol is only slightly hazy. The partial salt is stored for two weeks at room temperature and is found to be stable. A blend of this acid-blocked polyol and other polyols and additives, as described in example 9 hereafter, is also tested for eventual metal corrosion. No corrosion is found after aging of this polyol blend in presence of a carbon steel sample for three weeks at 80°C.

### Examples 6, 6C, 7, 7C and 7C1

The visual stability of polyol blends with a carboxylic acid are given in Table 3. The values are given in grams.

**TABLE 3**

| Example | 6 | 6C* | 7 | 7C* | 7C1* |
|---|---|---|---|---|---|
| Polyol B | 60 | | 60 | | 60 |
| Polyol C | 40 | | 40 | | 40 |
| Voranol 4701 | | 100 | | 100 | |
| Glycolic acid | 0.046 | 0.046 | 0.046 | 0.046 | |
| Niax A-300 | | | | | 0.51 |
| Dabco 33 LV | | | 0.51 | 0.51 | |
| Appearance at 1 week | VSH | C | SH | C | H |
| Appearance at 4 weeks | VSH | C | | | WP |
| Appearance at 2 months | VSH | C | | | WP |
| *6C, 7C and 7C1 are comparative examples. | | | | | |
| VHS = Very Slightly Hazy; SH = Slightly Hazy; C = Clear; | | | | | |
| H = Hazy; WP = White Precipitate | | | | | |

The visual appearance of examples 6 and 7 (in relation to samples 6C and 7C) confirms that a salt is formed between polyol B, an amine initiated polyol, and the acid. This is confirmed by NMR tests carried out on a JEOL 400 MHz spectrometer at a Carbon-13 frequency of 100.5 MHz on similar polyol + acid solutions.

Comparative example 7C1 shows that that Niax A-300, a commercially available amine salt catalyst, is not readily compatible with polyol B.

### Examples 8 and 8C

The difference between the acid blocked autocatalytic polyols of the present invention versus an non-neutralized autocatalytic polyol with a carboxylic acid blocked amine catalyst, are given in Table 4. Weights are in grams and times in minutes).

**TABLE 4**

| Example | 8 | 8C* |
|---|---|---|
| Polyol B | 24.9 | 21.7 |
| Addition glycolic acid | 0.128 | |
| Waiting time after mixing | 10 | |
| Addition Dabco 33 LV | 0.21 | |
| Mixing Dabco 33 LV + Glycolic acid | | 0.19 + 0.107 |
| Waiting time after mixing amine + acid and before blending with polyol B | | 10 |
| Appearance after 30 minutes mixing | Stable, hazy, solution/dispersion | Two phase system with TEDA/glycolic acid salt phased out |
| *8C is a comparative example. | | |

In example 8 polyol B, an autocatalytic, amine initiated, polyol is partially neutralized with glycolic acid and then a conventional amine catalyst, Dabco 33 LV, is added. After thorough mixing a stable, hazy solution/dispersion is obtained. NMR spectra confirm that all of these components are present as partial salts in the blend.

In comparative example 8C, an amine catalyst salt between Dabco 33 LV and glycolic acid, is produced according to the teaching of US 5,489,618. This amine salt is then added to polyol B. However, the salt is found to be incompatible and stays in a separate phase as confirmed by NMR data showing neither TEDA (the amine of Dabco 33 LV or triethylenediamine) or glycolic acid peaks.

### Examples 9 and 9C.

Molding by bench foaming without amine co-catalysis: Foams are prepared without an amine co-catalyst on a bench scale according to the formulations of Table 5.

**TABLE 5**

| Example | 9 | 9C* |
|---|---|---|
| Acid-blocked polyol example 5 | 26.09 | |
| Polyol B | | 25 |
| Specflex NC-630 | 39 | 37.5 |
| Specflex NC-700 | 0 | 37.5 |
| Copolymer D | 36 | |
| Polyol A | 1 | 1 |
| Water | 4.2 | 4.2 |
| DEOA | 1.6 | 1.6 |
| Niax Y-10184 | 1.2 | 1.2 |
| Voranate T-80 (index) | 105 | 105 |
| | | |
| Foam density (kg/m3) | 32 | 32 |
| 75 % Compression set | 13.7 | 80 |
| *9C is a comparative example. | | |

The positive effect of partially neutralizing polyol B with glycolic acid on foam aging properties is confirmed by example 9. These formulations are solely catalyzed with a combination of amine based, autocatalytic polyols.

### Examples 10, 11 and 12

Good molded foams were produced on the bench with the formulations given in Table 6. These formulations are based on various amounts of Specflex NC 700 copolymer polyol to give different foam hardnesses for use in seat cushions, backrest or bolsters. No amine catalysts are needed as the combination of autocatalytic polyols A and B partially neutralized with glycolic acid give the appropriate reactivity profile to these formulations. No amine odors are noticed at demold.

**TABLE 6**

| Example | 10 | 11 | 12 |
|---|---|---|---|
| Application | Backrest | Seat cushion | bolster |
| Specflex NC 700 | 30 | 40 | 60 |
| Polyol A | 3 | 3 | 3 |
| Polyol B | 19 | 19 | 19 |
| Polyol C | 48 | 38 | 18 |
| Water | 4.2 | 4.2 | 4.2 |
| Glycolic acid | 0.05 | 0.05 | 0.05 |
| Glycerine | 1.6 | 1.6 | 1.6 |
| Niax Y 10184 | 1 | 1 | 1 |
| | | | |
| Voranate T-80 Index | 105 | 105 | 105 |
| | | | |
| Molded density Kg/m3 | 26 | 28 | 28 |

### Examples 13 and 14:

Molded parts are produced with a Krauss-Maffei KM-40 machine, using the formulations in Table 7. The formulations give foams having good 75 % compression set properties. Demolding time is 6 and 5 minutes respectively for examples 13 and 14 (mold volume about 20 liters).

**TABLE 7**

| Example | 13 | 14 |
|---|---|---|
| Specflex NC 632 | 18.5 | 18.5 |
| Specflex NC 700 | 40 | 40 |
| Polyol B | 40 | 40 |
| Polyol A | 1.5 | 1.5 |
| Water | 4.12 | 4.12 |
| DEOA (99%) | 1.48 | 1.48 |
| Glycerine | 0.4 | 0.4 |
| Dabco DC 5169 | 1.0 | 1.0 |
| Glycolic acid (70%) | 0.04 | 0.04 |
| Gluconic acid (50%) | 0.155 | 0.155 |
| Dabco 33 LV | 0 | 0.1 |
| Voranate T-80 index | 100 | 100 |
| | | |
| Part weight (g) | 597 | 594 |
| Core density (kg/m3) | 30.5 | 31.3 |
| Airflow (cfm) | 6.4 | 5.7 |
| 75 % compression set (%) | 10.6 | 11.7 |

### Example 15

Good foam is produced under the same conditions as preceding examples 13 and 14 with a combination of glycolic acid and 2-chloropropionic acid while the same formulation without acids has a 75 % compression set of 34.1 (OEM's specification is < 20 %). The formulations and foam properties are given in Table 8

**TABLE 8**

| Example | 15 |
|---|---|
| Specflex NC 632 | 18.5 |
| Specflex NC 700 | 40 |
| Polyol B | 40 |
| Polyol A | 1.5 |
| Water | 4.12 |
| DEOA (99%) | 1.48 |
| Glycerine | 0.4 |
| Dabco DC 5169 | 1.0 |
| 2-chloropropionic acid | 0.044 |
| Glycolic acid | 0.04 |
| Voranate T-80 index | 100 |
| | |
| Demolding time (min) | 5 |
| Part weight (g) | 595 |
| Core density (kg/m3) | 31.1 |
| Airflow (cfm) | 5.5 |
| 75 % Compression set (%) | 13.8 |
| Tensile Strength (KPa) | 108 |
| Elongation (%) | 94 |
| Humid aging (VW-Audi) | |
| Tensile Strength (KPa) | 101 |
| Elongation (%) | 117 |

After VW-Audi humid aging according to PV 3410 - 93 (200 hours at 90°C and 100 % RH) foam without the acids has a tensile strength of only 69 KPa versus an initial value of 118 KPa before aging. This indicates foam degradation when acids are not used. The data shows the foam of Example 15 does not degrade as the tensil strength is unchanged after humid aging. The level of acid used in Example 15 neutralizes 2 percent of the total amines present in the formulation.

Other embodiments of the invention will be apparent to those skilled in the art from a consideration of the invention disclosed herein. It is intended that the specification and examples be considered as exemplary only, with the scope of the invention being indicated by the following claims.

## Claims

1. A process for the production of a polyurethane foam by reaction of a mixture of
(a) at least one liquid organic polyisocyanate with
(b) a polyol composition comprising:
(b1) from 0 to 99 percent by weight of a polyol compound having a functionality of 2 to 8 and a hydroxyl number of from 15 to 300 mg KOH/gram, and
(b2) from 1 to 100 by weight of at least one polyol compound having a functionality of 2 to 8, a hydroxyl number of from 15 to 800 mg KOH/gram and containing at least one tertiary amine group providing autocatalytic function, in which part of the amine is acid blocked/neutralized with glycolic acid ;
wherein the weight percent is based on the total amount of polyol composition (b);
(c) in the presence of water as a blowing agent; and
(d) optionally additives or auxiliary agents known per se for the production of polyurethane foams, including catalysts.

2. A process of Claim 1 wherein polyol (b2) is 25 percent or less by weight of the total component (b).

3. The process of any of the preceding claims wherein the hydroxyl number for polyol (b2) is from 20 to 300 mg KOH/gram.

4. The process of any of the preceding claims wherein the initiator for polyol (b2) contains at least one N- alkyl amino group or at least one N,N-dialkyl amino group wherein the alkyl contains 1 to 6 carbon atoms.

5. The process of any of the preceding claims wherein the initiator for polyol (b2) is 3,3'-diamino-N- methyldipropylamine; 2,2'-diamino-N-methyldiethylamine; 2,3- diamino-N-methyl-ethyl-propylamine; 3,3' -diamino-N- methyldipropylamine.

6. The process of claim 5 wherein the initiator is 3,3' -diamino-N-methyldipropylamine.

7. The process of claim 6 wherein the amount of polyol (b2) is less than 5 weight percent of the total polyol composition (b).

8. The process of any of the preceding claims wherein water is present as a blowing agent.

9. A polyurethane foam prepared by the process of any one of claims 1 to 8.

10. A polyol composition comprising from 1 to 75 percent by weight of a polyol compound (b2) having a functionality of 2 to 8, a hydroxyl number of from 15 to 800 mg KOH/gram and containing at least one tertiary amine group providing autocatalytic function, wherein the initiator for polyol (b2) is 3, 3' -diamino-N-methyldipropylamine; 2,2'-diamino- N-methyldiethylamine; 2,3-diamino-N-methyl-ethyl-propylamine; 3,3'-diamino-N-methyldipropylamine or a mixture thereof, in which a part, the part being less than 80 percent, of the amines are neutralized with glycolic acid.

11. The polyol composition of claim 10 wherein the initiator for polyol (b2) is 3, 3' -diamino-N-methyldipropylamine.

12. The polyol composition of claim 11 wherein polyol (b2) is less than 5 percent by weight of the total composition.

## Patentansprüche

1. Ein Verfahren zur Herstellung eines Polyurethanschaums durch Umsetzen einer Mischung aus
(a) mindestens einem flüssigen organischen Polyisocyanat mit
(b) einer Polyolzusammensetzung, die Folgendes beinhaltet:
(b1) zu 0 bis 99 Gewichtsprozent eine Polyolverbindung mit einer Funktionalität von 2 bis 8 und einer Hydroxylzahl von 15 bis 300 mg KOH/Gramm und
(b2) zu 1 bis 100 Gewichtsprozent mindestens eine Polyolverbindung mit einer Funktionalität von 2 bis 8, einer Hydroxylzahl von 15 bis 800 mg KOH/Gramm und enthaltend mindestens eine tertiäre Aminogruppe, die eine autokatalytische Funktion bereitstellt, worin ein Teil des Amins mit Glycolsäure säureblockiert/neutralisiert ist;
wobei die Gewichtsprozentangabe auf der Gesamtmenge der Polyolzusammensetzung (b) basiert;
(c) in Gegenwart von Wasser als Treibmittel; und
(d) wahlweise per se für die Herstellung von Polyurethanschäumen bekannten Zusatzstoffen oder Hilfsmitteln, einschließlich Katalysatoren.

2. Verfahren gemäß Anspruch 1, wobei Polyol (b2) 25 Gewichtsprozent oder weniger der Gesamtkomponente (b) ausmacht.

3. Verfahren gemäß einem der vorhergehenden Ansprüche, wobei die Hydroxylzahl für Polyol (b2) 20 bis 300 mg KOH/Gramm beträgt.

4. Verfahren gemäß einem der vorhergehenden Ansprüche, wobei der Initiator für Polyol (b2) mindestens eine N-Alkylaminogruppe oder mindestens eine N,N-Dialkylaminogruppe enthält, wobei das Alkyl 1 bis 6 Kohlenstoffatome enthält.

5. Verfahren gemäß einem der vorhergehenden Ansprüche, wobei der Initiator für Polyol (b2) 3,3'-Diamino-N-methyldipropylamin; 2,2'-Diamino-N-methyldiethylamin; 2,3-Diamino-N-methylethylpropylamin; 3,3'-Diamino-N-methyldipropylamin ist.

6. Verfahren gemäß Anspruch 5, wobei der Initiator 3,3'-Diamino-N-methyldipropylamin ist.

7. Verfahren gemäß Anspruch 6, wobei die Menge an Polyol (b2) weniger als 5 Gewichtsprozent der gesamten Polyolzusammensetzung (b) ausmacht.

8. Verfahren gemäß einem der vorhergehenden Ansprüche, wobei Wasser als Treibmittel vorhanden ist.

9. Ein Polyurethanschaum, hergestellt nach dem Verfahren gemäß einem der Ansprüche 1 bis 8.

10. Eine Polyolzusammensetzung, beinhaltend zu 1 bis 75 Gewichtsprozent eine Polyolverbindung (b2) mit einer Funktionalität von 2 bis 8, einer Hydroxylzahl von 15 bis 800 mg KOH/Gramm und enthaltend mindestens eine tertiäre Aminogruppe, die eine autokatalytische Funktion bereitstellt, wobei der Initiator für Polyol (b2) 3,3'-Diamino-N-methyldipropylamin; 2,2'-Diamino-N-methyldiethylamin; 2,3-Diamino-N-methylethylpropylamin; 3,3'-Diamino-N-methyldipropylamin oder eine Mischung davon ist, worin ein Teil der Amine, wobei der Teil weniger als 80 Prozent beträgt, mit Glycolsäure neutralisiert ist.

11. Polyolzusammensetzung gemäß Anspruch 10, wobei der Initiator für Polyol (b2) 3,3'-Diamino-N-methyldipropylamin ist.

12. Polyolzusammensetzung gemäß Anspruch 11, wobei Polyol (b2) weniger als 5 Gewichtsprozent der Gesamtzusammensetzung ausmacht.

## Revendications

1. Un procédé pour la production d'une mousse polyuréthane par réaction d'un mélange
(a) d'au moins un polyisocyanate organique liquide avec
(b) une composition de polyol comprenant :
(b1) de 0 à 99 pour cent en poids d'un composé polyol ayant une fonctionnalité allant de 2 à 8 et un indice d'hydroxyle allant de 15 à 300 mg KOH/gramme, et
(b2) de 1 à 100 pour cent en poids d'au moins un composé polyol ayant une fonctionnalité allant de 2 à 8, un indice d'hydroxyle allant de 15 à 800 mg KOH/gramme et contenant au moins un groupe amine tertiaire fournissant une fonction autocatalytique, dans lequel une partie de l'amine est bloquée/neutralisée avec de l'acide glycolique ;
le pourcentage en poids étant rapporté à la quantité totale de la composition de polyol (b) ;
(c) en présence d'eau en tant qu'agent gonflant ; et
(d) facultativement des additifs ou des agents auxiliaires connus en soi pour la production de mousses polyuréthane, incluant des catalyseurs.

2. Un procédé de la revendication 1, le polyol (b2) représentant 25 pour cent en poids ou moins du constituant (b) total.

3. Le procédé de n'importe lesquelles des revendications précédentes, l'indice d'hydroxyle pour le polyol (b2) allant de 20 à 300 mg KOH/gramme.

4. Le procédé de n'importe lesquelles des revendications précédentes, l'amorceur pour le polyol (b2) contenant au moins un groupe N-alkyl amino ou au moins un groupe N,N-dialkyl amino, l'alkyle contenant de 1 à 6 atomes de carbone.

5. Le procédé de n'importe lesquelles des revendications précédentes, l'amorceur pour le polyol (b2) étant la 3,3'-diamino-N-méthyldipropylamine ; la 2,2'-diamino-N-méthyldiéthylamine ; la 2,3-diamino-N-méthyl-éthyl-propylamine ; la 3,3'-diamino-N-méthyldipropylamine.

6. Le procédé de la revendication 5, l'amorceur étant la 3,3'-diamino-N-méthyldipropylamine.

7. Le procédé de la revendication 6, la quantité de polyol (b2) étant inférieure à 5 pour cent en poids de la composition de polyol (b) totale.

8. Le procédé de n'importe lesquelles des revendications précédentes, l'eau étant présente en tant qu'agent gonflant.

9. Une mousse polyuréthane préparée par le procédé de n'importe laquelle des revendications 1 à 8.

10. Une composition de polyol comprenant de 1 à 75 pour cent en poids d'un composé polyol (b2) ayant une fonctionnalité allant de 2 à 8, un indice d'hydroxyle allant de 15 à 800 mg KOH/gramme et contenant au moins un groupe amine tertiaire fournissant une fonction autocatalytique, l'amorceur pour le polyol (b2) étant la 3,3'-diamino-N-méthyldipropylamine ; la 2,2'-diamino-N-méthyldiéthylamine ; la 2,3-diamino-N-méthyl-éthyl-propylamine ; la 3,3'-diamino-N-méthyldipropylamine ou un mélange de celles-ci, dans lequel une partie, la partie étant inférieure à 80 pour cent, des amines est neutralisée avec de l'acide glycolique.

11. La composition de polyol de la revendication 10, l'amorceur pour le polyol (b2) étant la 3,3'-diamino-N-méthyldipropylamine.

12. La composition de polyol de la revendication 11, le polyol (b2) étant inférieur à 5 pour cent en poids de la composition totale.
